# EUROPÄISCHE PATENTANMELDUNG

(11) **EP 2 735 976 A1**
(43) Veröffentlichungstag der Anmeldung: **28.05.2014**
(21) Anmeldenummer: 12008162.5
(22) Anmeldetag: 06.12.2012
(51) Int. Cl.: G06F 17/30

(54) **Codebasiertes Informationssystem**

(30) Priorität: 22.11.2012 EP 12007898
(71) Anmelder: ThePeople.de GmbH, 74223 Flein (DE)
(72) Erfinder: Kirner, Markus, 71720 Oberstenfeld (DE); Nägele, Carl Michael, 74076 Heilbronn (DE)
(74) Vertreter: Hössle Patentanwälte Partnerschaft

(57) **Zusammenfassung**

Die Erfindung betrifft ein codebasiertes Informationssystem für mindestens eine mobile Kommunikationseinheit, bei dem mittels einer spezifischen, auf der mindestens einen mobilen Kommunikationseinheit zu implementierenden Applikation individuelle Bild- und/oder Videodaten einem Code zuzuordnen sind, die Zuordnung des Codes zu den individuellen Daten auf eine als zentraler Server dienenden Datenbank zu übertragen und dort zu hinterlegen ist, und über die mindestens eine mobile Kommunikationseinheit der Code mittels der auf der mindestens einen mobilen Kommunikationseinheit implementierten Applikation zu erkennen ist, wodurch die Zuordnung des Codes zu den individuellen Daten von der Datenbank abgerufen und die Daten auf der mobilen Kommunikationseinheit angezeigt werden. Ferner betrifft die Erfindung ein entsprechendes Verfahren zur Bereitstellung individueller Daten, bspw. Bild- und/oder Videodaten auf mindestens einer mobilen Kommunikationseinheit.

## Beschreibung

Die vorliegende Erfindung betrifft ein codebasiertes Informationssystem für mindestens eine mobile Kommunikationseinheit. Ferner betrifft die vorliegende Erfindung ein entsprechendes Verfahren zur Bereitstellung individueller Daten, bspw. Bild- und/oder Videodaten auf mindestens einer mobilen Kommunikationseinheit.

Eine Applikation, kurz auch App genannt, ist ein Anwendungsprogramm für Smartphones, Tablet-Computer und andere mobile Kommunikationseinheiten, das schnell und unkompliziert über einen in ein entsprechendes Betriebssystem integrierten Online-Shop bezogen und direkt auf dem jeweils tragbaren Gerät bzw. der mobilen Kommunikationseinheit installiert und darüber implementiert werden kann.

Mobile Kommunikationseinheiten, wie bspw. Mobiltelefone, die über eine Kamera verfügen, können über eine spezifische Applikation zu einem Code-Scanner aufgerüstet werden. Damit können Strichcodes und Matrixcodes einfach eingelesen werden.

Als Strichcode, Balkencode oder Barcode wird in der Regel eine optoelektronisch lesbare Schrift bezeichnet, die aus verschiedenen Breiten, parallelen Strichen und Lücken besteht.

In der Zwischenzeit ist nahezu jedes Produkt im Handel mit einem derartigen Barcode, einem produktbezogenen Handelsstrichcode wie EAN (European Article Number), UPC (Universal Product Code), IAN oder JAN versehen.

Es ist nunmehr wünschenswert, an einen derartigen Barcode oder einen Matrixcode individuelle Informationen, wie bspw. Bild- und/oder Videoinformationen zu koppeln, d. h. darüber zu codieren, so dass diese jeweiligen Informationen für einen den Barcode bzw. den Matrixcode lesenden und zudem autorisierten Nutzer decodiert und damit angezeigt werden können. Um individuelle Informationen, wie bspw. individuelle Bild- und/oder Videoinformationen an einen Barcode oder Matrixcode anzubinden, muss auf jedes einzelne Druckerzeugnis, auf welchem der Code aufzubringen ist, bspw. eine Postkarte, ein individueller Code aufgebracht werden, um sicherzustellen, dass lediglich der gewollte Empfänger dieses Druckerzeugnisses Zugang zu den mit dem Code codierten Informationen hat. Ein Aufbringen derartig individueller Codes auf einzelnen Druckerzeugnissen ist jedoch sehr aufwendig und damit kostenintensiv.

Es ist nun eine Aufgabe der vorliegenden Erfindung eine Möglichkeit vorzusehen, auch mittels Druckerzeugnissen und Produkten mit identischen Codes individuelle Informationen wie bspw. Bild- und/oder Videoinformationen für einen oder mehrere ausgewählte Empfänger gezielt zugänglich zu machen, d. h. die Informationen wie bspw. Bild- und/oder Videoinformation individuell dem auf dem Druckerzeugnis vorgesehenen Code zuzuordnen.

Da bspw. ein Handelscode eines Produkts durchweg der gleiche Code ist, ist es wünschenswert, ein Verfahren bereitzustellen, um Informationen, die nur für einen speziellen Nutzer gedacht sind, dem entsprechenden Nutzer eineindeutig zuzuordnen.

Zur Lösung dieser Aufgabe wird ein codebasiertes Informationssystem mit den Merkmalen von Patentanspruch 1 sowie ein entsprechendes Verfahren mit den Merkmalen von Patentanspruch 10 bereitgestellt. Spezifische und vorteilhafte Ausgestaltungen sind den entsprechenden Unteransprüchen zu entnehmen.

Erfindungsgemäß wird ein codebasiertes Informationssystem für mindestens eine mobile Kommunikationseinheit zur Verfügung gestellt. Dabei sind über eine auf der mindestens einen mobilen Kommunikationseinheit zu implementierende spezifische Applikation individuelle Informationen bzw. Daten, wie bspw. Bild- und/oder Videodaten einem Code zuzuordnen. Diese Zuordnung bzw. Verknüpfung zwischen den individuellen Daten und dem Code ist auf eine als zentraler Server dienende Datenbank bspw. via Internet zu übertragen und dort zu speichern. Über die mindestens eine mobile Kommunikationseinheit ist der Code über die spezifische Applikation zu erkennen, wodurch die Zuordnung des Codes zu den individuellen Daten von der Datenbank abgerufen und die individuellen Daten, wie bspw. die individuellen Bild- und/oder Videodaten auf der mobilen Kommunikationseinheit abgespielt bzw. angezeigt werden.

Es gibt verschiedene Ausführungsformen der erfindungsgemäß zu verwendenden Applikation in Form von jeweiligen nativen Applikationen, die jeweils für eine bestimmte Plattform bzw. ein bestimmtes Betriebssystem geeignet sind. Native Applikationen erlauben generell einen direkten Zugriff auf eine Hardware und weitere Funktionen einer jeweiligen mobilen Kommunikationseinheit, wie bspw. Kamera, Lautsprecher etc.

Eine derartig erfindungsgemäß zu verwendende native Applikation wird bspw. auf eine erste mobile Kommunikationseinheit geladen und gestartet. Dadurch wird es möglich, über eine in der mobilen Kommunikationseinheit vorgesehene Kamerafunktion einen maschinenlesbaren Code einzulesen und ferner auf einen internen Datenspeicher (bspw. Video, Foto, Sound) der mobilen Kommunikationseinheit zuzugreifen und daraus ausgewählte Daten mit dem zuvor erfassten Code zu verknüpfen. Diese Verknüpfung wird auf eine als zentraler Server dienende Datenbank per Internet übertragen und gespeichert. Von nun ab werden bei Erfassung des Codes über die Applikation auf einer jeweiligen mobilen Kommunikationseinheit, auf welcher die Applikation implementiert ist, die hinterlegten Informationen automatisch wiedergegeben.

Das in der vorliegenden Erfindung zu verwendende Anwendungsprogramm bzw. die spezifische Applikation ermöglicht es, zwei-dimensionale Codes, sogenannte Datamatrizen und Barcodes mit einer in einer entsprechenden mobilen Kommunikationseinheit integrierten Kamera, in der Regel einer Digitalkamera, zu erfassen und darüber einem jeweiligen Anwender bzw. Nutzer der mobilen Kommunikationseinheit eine dem entsprechenden Code zugeordnete Information bzw. eine darin hinterlegte Information in decodierter Form, d. h. in Klartext anzuzeigen. Eine derartige hinter einem Code verborgene Information kann eine Textinformation, eine Bildinformation, eine codebasierte Information, eine Gutschein-Information oder auch eine Videoinformation sein. Eine Gutschein-Information kann dabei bedeuten, dass eine Nutzung der mit dem Code hinterlegten Daten auch im Rahmen eines Bonus- und Couponsystems eingesetzt werden kann. Liest beispielsweise ein Empfänger regelmäßig Codes von mehreren Postzustellungen eines spezifischen Absenders ein und sieht sich darüber damit verbundene Werbevideos an, kann er seitens des Absenders mit Bonuspunkten belohnt werden. Als Coupon kann dabei dem Empfänger ein Coupon-Code zugänglich gemacht werden, unter dessen Vorlage er einen Rabatt vom Absender erhält. Dieser Coupon-Code wird dabei als individuelle Daten dem Code zugeordnet, mit dieser Zuordnung auf der Datenbank hinterlegt, so dass der Empfänger bei Erkennen des Codes mittels der auf seiner mobilen Kommunikationseinheit implementierten Applikation auf diesen Coupon-Code zugreifen kann und/oder diesen angezeigt bekommt. Als Bonus bzw. Rabatt können auch digitale Produkte, wie eine App, ein Musikstück oder ein Spiel mit dem Code verknüpft werden.

Unter "Erkennen des Codes" wird im Rahmen der vorliegenden Offenbarung "Erfassen, Einlesen, Verarbeiten und Verknüpfen des Codes mit Informationen bzw. Abrufen der auf einem zentralen Server hinterlegten Verknüpfung des Codes mit Informationen" verstanden.

In der Regel verfügt ein Absender, der die individuellen Daten, bspw. Bild- und/oder Videodaten an einen von ihm ausgewählten Empfänger übermitteln will bzw. diesem zugänglich machen will, über eine erste mobile Kommunikationseinheit und der ausgewählte Empfänger über eine zweite mobile Kommunikationseinheit. Sowohl auf der ersten wie auch auf der zweiten mobilen Kommunikationseinheit ist die spezifische Applikation jeweilig zu implementieren. Der Absender liest mit Hilfe der Applikation über die erste mobile Kommunikationseinheit den Code zunächst ein und ordnet diesem dann die individuellen Daten, bspw. Bild- und/oder Videodaten zu. Diese Zuordnung des Codes zu den individuellen Daten wird auf eine als zentraler Server dienende Datenbank übertragen und dort abrufbar hinterlegt. Der gewünschte Empfänger erkennt nun mit Hilfe der Applikation über die zweite mobile Kommunikationseinheit den Code, wodurch ihm auf der zweiten mobilen Kommunikationseinheit die individuellen Daten, bspw. Bild- und/oder Videodaten angezeigt werden. Das heißt, durch Erkennen des Codes erfolgt zunächst automatisch ein Zugriff auf die als zentraler Server dienende Datenbank, wovon die Verknüpfung zwischen Code und individuellen Daten abgerufen und dadurch die individuellen Daten angezeigt werden.

Es ist jedoch auch denkbar, dass der Absender über die Applikation, die auf einer anderen Rechnereinheit, wie bspw. einem PDA, implementiert ist, Daten, bspw. Bild- und/oder Videodaten, die ebenfalls auf der Rechnereinheit hinterlegt sind, dem einzulesenden Code zuordnet, so dass der Empfänger dann mit Hilfe der auf einem dem Empfänger zugeordneten mobilen Kommunikationseinheit implementierten Applikation den Code erkennen und dadurch die Daten, bspw. Bild - und/oder Videodaten einsehen kann.

Generell ist es denkbar, dass eine von dem Absender zu bestimmende Mehrzahl an Empfängern Zugriff zu den Daten erhält.

Mittels der erfindungsgemäß vorgesehenen spezifischen Applikation, die bspw. auf der entsprechenden mobilen Kommunikationseinheit des Absenders zu implementieren bzw. zu installieren ist, können individuelle Bild- und/oder Videoinformationen, die mit einer in der jeweiligen mobilen Kommunikationseinheit vorgesehenen Kamera aufgenommen sind, mittels eines einzulesenden Barcodes und/oder Matrixcodes hinterlegt und darüber auf der zuvor erwähnten, als zentraler Server dienenden Datenbank und ggf. auf der mobilen Kommunikationseinheit gespeichert werden.

Mit Hilfe der erfindungsgemäß zu verwendenden spezifischen Applikation, auch Interactioncode-App oder kurz IAC-App genannt, werden einem beliebigen Bar- oder QR (Quick Response)-Code, welcher auf optisch lesbaren Medien dargestellt ist, spezifische Informationen, wie bspw. Bilder, Videos etc. zugeordnet. Diese werden auf einem bspw. über das Internet erreichbaren Server gespeichert und können über die IAC-App durch einen integrierten Scanner von beliebigen mobilen Kommunikationseinheiten bzw. mobilen Endgeräten abgerufen werden. Dadurch können seitens eines Absenders zum einen öffentlich abrufbare Inhalte im System hinterlegt werden, welche von allen Nutzern der IAC-App mittels des in ihrem jeweiligen mobilen Endgerät bzw. in ihrer jeweilig zugeordneten mobilen Kommunikationseinheit integrierten Scanners abgerufen werden können. Der Absender kann ferner über die IAC-App erfindungsgemäß jedem Code individuelle, nicht öffentliche Informationen hinterlegen. Diese Informationen können einem vorab durch den Anwender bspw. per Mobilfunknummer oder über andere Identifizierungssysteme, wie bspw. soziale Netzwerke oder E-Mail Adressen definierten Empfängerkreis zugänglich gemacht werden. Alternativ kann der Inhalt auch durch einen Zugangscode bzw. ein Passwort geschützt werden, den der Empfänger zum Wiedergeben der mit dem Code verknüpften Information eingeben muss.

Der Empfänger wird dann vor einer Anzeige der individuellen Daten vorab mit seiner individuellen, eindeutigen Mobilfunknummer, seiner Geräteidentifikationsnummer oder anderen Systemen, wie bspw. E-Mail oder sozialen Netzwerken identifiziert und erzeugt auf diese Weise eine eindeutige Nutzer- bzw. Empfängerkennung. Das Erfassen der Information zur Identifizierung kann bspw. durch eine Eingabemaske in der IAC-App oder durch automatisiertes Auslesen aus der mobilen Kommunikationseinheit des Empfängers erfolgen. Die Mobilfunknummer kann auf Seiten des Absenders durch manuelle Auswahl aus einem entsprechenden Adressbuch des Absenders vorgegeben werden.

Weitere Nutzer können die hinterlegten Informationen nur lesen, wenn sie, je nachdem welche Authentifizierungsmodalität der Absender gewählt hat, den vorab übermittelten Zugangscode bzw. das Passwort eingeben oder sich als definierte Empfänger bspw. über ihre Mobilfunknummer identifizieren. Diese Identifizierung erfolgt über das oben beschriebene Verfahren. Sind zum selben Bar- oder QR-Code mehrere Informationen hinterlegt, kann das erfindungsgemäße codebasierte Informationssystem zwischen öffentlich zugänglichen Inhalten und durch den Absender geschützten Inhalten unterscheiden.

Der Absender verbindet über die Applikation auf einer ihm zugeordneten mobilen Kommunikationseinheit hinterlegte bzw. gespeicherte Bild- und/oder Videoinformationen mit einem eingelesenen Code, so dass diese Bild- und/oder Videoinformationen dann diesem Code zugeordnet auf einer als zentraler Server dienenden Datenbank gespeichert werden. Der Empfänger scannt den Code mittels der auf einer ihm zugeordneten mobilen Kommunikationseinheit implementierten spezifischen Applikation, wodurch die dem Code zugeordneten Bild - und/oder Videoinformationen von der als zentraler Server dienenden Datenbank abgerufen und auf der dem Empfänger zugeordneten mobilen Kommunikationseinheit wiedergegeben werden.

Das erfindungsgemäße System kann dabei Barcodes, auch EAN-Codes, auf Verpackungen, Matrixcodes und Frankierabdrucke von Postsendungen, wie bspw. Postkarten nutzen.

Gemäß einer Ausführungsform des erfindungsgemäßen codebasierten Informationssystems ist ein Zugang zu den individuellen, mit dem Code codierten Daten für die Applikation nach Angabe eines Passworts zu gewähren. Dabei ist es denkbar, dass das Passwort von einem Absender der Daten, bspw. Bild- und/oder Videodaten zu vergeben und einem Nutzer der mobilen Kommunikationseinheit zu übermitteln ist. Ein derartiges Passwort kann bspw. auf einer mit dem Code versehenen Postkarte als ein separat von dem Code von dem Absender notiertes fiktives Wort bzw. als eine entsprechende Zeichenkette übermittelt werden. Das bedeutet, dass auf dem jeweiligen Druckerzeugnis, wie bspw. einer Postkarte, sowohl der Code, mit dem die Postkarte bspw. bereits im Handel erhältlich ist, als auch eine von dem Absender individuell aufgedruckte bzw. aufgebrachte Zeichenkette vorgesehen ist. Eine derartige Vorgehensweise hat den Vorteil, dass im Handel erhältliche Druckerzeugnisse, wie bspw. Postkarten, alle mit einem gleichen Code versehen sein können, der erst durch den Absender über die entsprechende Applikation individualisiert wird, wobei der Absender weitere Informationen, nämlich individuelle Daten, bspw. Bild - und/oder Videodaten hinterlegt, die dann für einen ausgewählten Empfänger mittels einer geeigneten mobilen Kommunikationseinheit erst nach Eingabe des übermittelten Passworts zugänglich werden. Der Absender nutzt die auf seiner mobilen Kommunikationseinheit zuvor zu implementierende Applikation, um den auf der Postkarte hinterlegten Code einzulesen, dahinter weitere von ihm ausgewählte Daten, bspw. Bild- und/oder Videodaten zu hinterlegen und mit einem Passwort zu schützen. Der Empfänger kann über die gleiche auf seiner mobilen Kommunikationseinheit ebenfalls zuvor zu implementierende Applikation den auf dem Druckerzeugnis befindlichen Code einlesen, wobei er dann nach einem Passwort gefragt wird und erst nach Eingabe des Passworts die individuellen Daten, bspw. Bild- und/oder Videodaten abgerufen bzw. auf seiner mobilen Kommunikationseinheit angezeigt werden. Dadurch ist nur ein autorisierter Zugang auf die individuellen Daten, bspw. Bild- und/oder Videodaten möglich, so dass nicht jeder diese individuellen Daten, bspw. Bild- und/oder Videodaten abrufen kann. Durch eine derartige Vorgehensweise wird vermieden, dass jedes Druckerzeugnis bereits beim Kauf im Handel individualisiert sein muss, sondern es genügt, wenn ein Code vorgesehen ist, der von einem Absender über die Applikation individualisiert werden kann, in dem Sinne, dass weitere Daten, bspw. Bild - und/oder Videodaten hinterlegt werden können, die auch nur für einen speziellen von dem Absender ausgewählten Empfänger abrufbar sind.

Neben der Möglichkeit, die Autorisierung für den Zugang zu den individuellen Daten, bspw. Bild- und/oder Videodaten über ein Passwort zu realisieren, ist es auch denkbar, dass aktuelle Positionsdaten der mobilen Kommunikationseinheit eines ausgewählten Empfängers zu erfassen sind und darüber der Code über die Applikation auf der mobilen Kommunikationseinheit automatisch erkannt wird.

Ferner ist es denkbar, gemäß einer weiteren Ausführungsform des codebasierten Informationssystems, dass die mobile Kommunikationseinheit ein Mobiltelefon ist. Dabei ist es ferner möglich, dass der Absender der individuellen Daten, bspw. Bild- und/oder Videodaten eine dem Mobiltelefon eineindeutig zugeordnete Mobilfunknummer nutzt, um den Zugang zu den Daten, bspw. Bild- und/oder Videodaten zu autorisieren, was bedeutet, dass der Nutzer des Mobiltelefons mit der von dem Absender gewünschten Mobilfunknummer bei Einlesen des Codes über die auf dem Mobiltelefon implementierte Applikation automatisch aufgrund der spezifisch ausgewählten Mobilfunknummer Zugang zu den hinter dem Code "verborgenen" individuellen Daten, bspw. Bild- und/oder Videodaten hat, was bedeutet, dass diese Informationen automatisch auf seinem Mobiltelefon angezeigt werden.

Gemäß einer weiteren Ausführungsform des erfindungsgemäßen Informationssystems ist es ferner auch möglich, dass seitens der Post vergebene eineindeutige Frankierabdrucke auf einer Postsendung gleichzeitig als Code des Informationssystems dienen, da auch darüber eine eineindeutige Zuordnung zu dem seitens des Absenders als autorisiert ausgewählten Empfänger gegeben ist. Allerdings ist es dazu nötig, dass erst nach Aufbringen eines jeweiligen Frankierabdrucks auf einer jeweiligen Postsendung seitens des Absenders die individuellen Daten, bspw. Bild- und/oder Videodaten hinterlegt werden, wozu dann der Empfänger über die auf seiner mobilen Kommunikationseinheit implementierte Applikation automatisch Zugang hat. Als Postsendung kann eine Postkarte, aber auch andere Poststücke, wie Briefe und Pakete, verwendet werden. Anstelle des eigentlichen Frankierabdrucks kann im Rahmen der Erfindung beim Aufdrucken des Frankierabdrucks mittels einer entsprechenden Frankiermaschine auch ein nebenstehender Systemcode im gleichen Druckvorgang auf die jeweilige Postsendung aufgebracht werden, welcher dann zur Hinterlegung von individuellen Daten seitens des Absenders zu nutzen ist.

Die vorliegende Erfindung betrifft ferner ein Verfahren zum Hinterlegen und Übermitteln individueller Daten, bspw. Bild- und/oder Videodaten, wobei über eine auf mindestens einer mobilen Kommunikationseinheit zu implementierende Applikation individuelle Daten, bspw. Bild- und/oder Videodaten einem Code zugeordnet werden, die Zuordnung des Codes zu den individuellen Daten automatisch auf eine als zentraler Server dienende Datenbank übertragen und dort hinterlegt wird, über die mobile Kommunikationseinheit der Code über die Applikation erkannt wird, wodurch die Zuordnung des Codes zu den Daten von der Datenbank automatisch abgerufen und die Daten, bspw. Bild- und/oder Videodaten auf der mobilen Kommunikationseinheit automatisch angezeigt bzw. abgespielt werden.

Wie bereits voranstehend erwähnt, ist es möglich, einen Zugang zu den hinterlegten individuellen Daten, bspw. Bild - und/oder Videodaten nur dann zu gewähren, wenn ein von dem Absender vergebenes Passwort seitens des Empfängers korrekt eingegeben wird, so dass dann die individuell hinterlegten Daten, bspw. Bild- und/oder Videodaten freigegeben und damit dem Empfänger angezeigt werden. Bei der Passwortvergabe durch den Absender wird diesem von der Applikation ein Passwort generiert oder der Absender selbst gibt ein von ihm gewähltes Passwort ein. Das Passwort kann bspw. seitens des Absenders auf einem an den gewünschten Empfänger zu versendendes Druckerzeugnis oder einem dem gewünschten Empfänger zu übermittelnden Produkt aufgebracht werden. Der gewünschte Empfänger erfasst den Code mittels seiner mobilen Kommunikationseinheit und gibt dann das an ihn seitens des Absenders übermittelte Passwort auf Anfrage seitens der Applikation ein. Erst dann wird die codierte Information freigegeben und dem Empfänger auf der mobilen Kommunikationseinheit, bspw. auf einem entsprechenden Display, angezeigt. Im Falle von Videodaten ist es auch denkbar, dass das Video angezeigt und der Ton entsprechend über einen in der mobilen Kommunikationseinheit vorgesehenen Lautsprecher akustisch wahrnehmbar gemacht wird. Eine Zuordnung zu einem gewünschten Empfänger kann auch, wie bereits voranstehend erwähnt, im Falle dass die mobile Kommunikationseinheit ein Mobiltelefon ist, durch eine dem Mobiltelefon eineindeutig zugeordnete Mobilrufnummer erfolgen. Dabei gibt der Absender die Mobilfunknummer des Empfängers bzw. des dem Empfänger zugehörigen Mobiltelefons in der Applikation an und der Empfänger identifiziert sich zur Nutzung mit seiner Mobilfunknummer. Die Mobilfunknummer kann vom Absender direkt aus den im Mobiltelefon gespeicherten Mobilfunknummern gewählt werden.

Zudem können, wie voranstehend erwähnt, auch der Standort bzw. die aktuellen Positionsdaten des Empfängers zur Zuordnung dienen. Der Absender kann dabei eine Zieladresse des Empfängers eingeben. Die Applikation auf der mobilen Kommunikationseinheit gewährleistet einen Zugriff auf eine GPS-Ortung der mobilen Kommunikationseinheit des gewünschten Empfängers.

Bei Postsendungen dient ein individueller Frankierabdruck zum Hinterlegen bestimmter individueller Bild- und/oder Videoinformationen des Absenders. Der Empfänger kann über die Applikation auf seiner mobilen Kommunikationseinheit den Frankierabdruck einlesen und dadurch die dort hinterlegten individuellen Bild- und/oder Videoinformationen direkt abrufen, so dass diese auf seiner mobilen Kommunikationseinheit in geeigneter Weise wiedergegeben werden. Aufgrund der Einzigartigkeit der Frankierabdrucke mittels digitaler Drucktechnologie können jedem Frankierabdruck individuelle Daten, wie bspw. Bild- und/oder Videoinformationen zugeordnet werden. Die Frankierabdrucke werden mittels digitaler Drucktechnologie mit allen relevanten Daten verschlüsselt in einem DataMatrix-Code (2-D-Strichcode) oder Barcode auf jeweilige Postsendungen aufgebracht oder mit einem selbstklebenden Frankierstreifen angebracht. Derartige Frankierabdrucke werden von vielen internationalen Postdienstleistern, wie bspw. der Deutschen Post AG zum Zweck einer Entgeltsicherung sowie einer Ablaufsteuerung und -sicherung gelesen. Jeder Abdruck ist durch eine individuelle Sicherheitsinformation ein Unikat. Dies macht die voranstehend erwähnte eineindeutige Zuordnung zu einem jeweiligen Empfänger möglich.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnung ausführlich beschrieben.

### Kurze Beschreibung der Zeichnungen

Figur 1 zeigt in schematischer Darstellung Teilaspekte einer ersten Ausführungsform des erfindungsgemäßen Verfahrens.
Figur 2 zeigt in schematischer Darstellung Teilaspekte einer weiteren Ausführungsform des erfindungsgemäßen Verfahrens.
Figur 3 zeigt ein Druckerzeugnis zur Verwendung zur Durchführung einer anderen Ausführungsform des erfindungsgemäßen Verfahrens.
Figur 4 zeigt ein weiteres Beispiel für ein Druckerzeugnis zur Verwendung bei Realisierung einer anderen Ausführungsform des erfindungsgemäßen Verfahrens.
Figur 5 zeigt einen Ablauf einer Zuordnung eines Codes zu individuellen Daten gemäß einer weiteren Ausführungsform des erfindungsgemäßen Verfahrens.
Figur 6 zeigt in schematischer Darstellung einen stufenweisen Ablauf einer Vorgehensweise zur Hinterlegung von individuellen Daten, bspw. Bild- und/oder Videodaten zur Realisierung einer noch weiteren Ausführungsform des erfindungsgemäßen Verfahrens auf Seiten eines Absenders.

### Detaillierte Beschreibung der Zeichnung

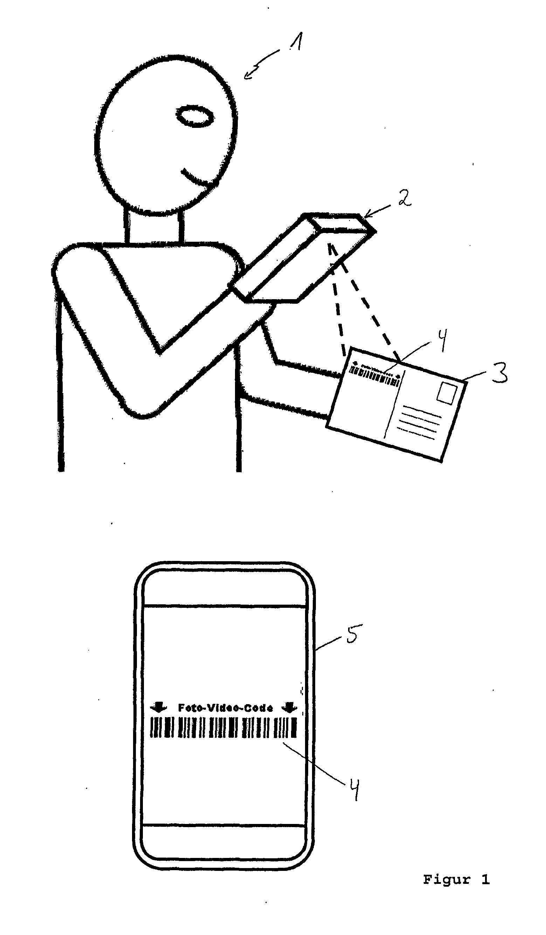

Figur 1 zeigt einen Nutzer 1 mit einer mobilen Kommunikationseinheit 2, die eine hier nicht näher dargestellte Kamera umfasst. Mit Hilfe der Kamera, die bspw. in der mobilen Kommunikationseinheit 2 integriert sein kann oder zumindest mit dieser in Kommunikationsverbindung steht, ist es möglich, neben einer Aufnahme von Bildern auch einen Code aufzunehmen. Ein derartiger Code 4 befindet sich bspw. auf einem Druckerzeugnis 3, wie hier einer Postkarte. Mit Hilfe der Kamera ist es nunmehr möglich, wie durch gestrichelte Linien angedeutet, den auf der Postkarte 3 befindlichen Code 4 aufzunehmen. Dieser Code 4 erscheint auf einem Display 5 der mobilen Kommunikationseinheit 2 und wird sodann erkannt.

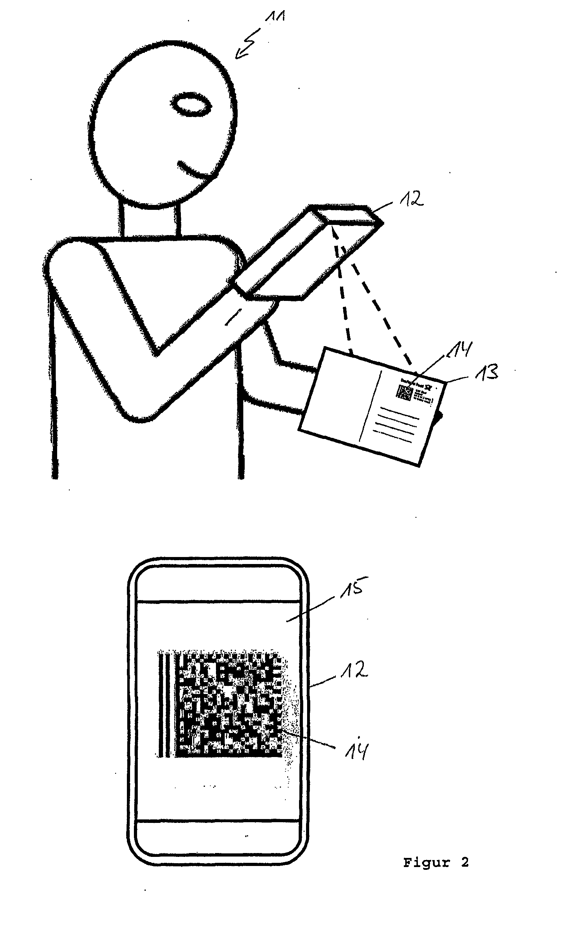

Figur 2 zeigt wiederum einen Nutzer 11 mit einer mobilen Kommunikationseinheit 12. Die mobile Kommunikationseinheit 12 umfasst genau wie die mobile Kommunikationseinheit 2 aus Figur 1 eine Kamera, die hier nicht näher dargestellt ist und in die mobile Kommunikationseinheit 12 integriert sein kann oder zumindest mit dieser in Kommunikationsverbindung steht. Mit Hilfe der Kamera ist es möglich, sowohl Bilder als auch andere Informationen, die sich bspw. auf einem Druckerzeugnis befinden, aufzunehmen, einzulesen und auf einem entsprechenden Display 15 der Kommunikationseinheit 12 anzuzeigen. In Figur 2 wird im Gegensatz zu Figur 1 mit Hilfe der hier nicht näher dargestellten Kamera ein sich auf einer Postkarte 13 befindlicher Frankierabdruck 14 aufgenommen, wie durch gestrichelte Linien angedeutet. Dieser Frankierabdruck 14 erscheint sodann auf dem Display 15 der mobilen Kommunikationseinheit 12. Bei der mobilen Kommunikationseinheit 12 kann es sich bspw. um ein Mobiltelefon handeln.

Verfügt nun der Anwender 1 bzw. 11 über eine Ausführungsform der erfindungsgemäß vorgesehenen spezifischen Applikation, die auf seinem mobilen Kommunikationsgerät 2 bzw. 12 implementiert ist, so kann er mit Hilfe dieser Applikation von ihm ausgewählte und in einer Speichereinheit der mobilen Kommunikationseinheit 2 bzw. 12 hinterlegte Daten, bspw. Bild- und/oder Videodaten mit dem nunmehr eingelesenen Code 4 bzw. dem eingelesenen Frankierabdruck 14 verbinden und dadurch diese Daten, bspw. Bild- und/oder Videodaten mittels des Codes 4 bzw. 14 codiert hinterlegen. Diese Zuordnung bzw. Verknüpfung der individuellen Daten zu dem Code 4 bzw. dem Frankierabdruck 14 wird zentral, d.h. auf einer als zentraler Server dienenden Datenbank abrufbar hinterlegt. Ferner kann er mittels der Applikation Personen auswählen, die Zugang zu den hinterlegten Daten, bspw. Bild- und/oder Videodaten haben sollen und kann vorsehen, dass diese sich in geeigneter Weise für den Zugang authentifizieren müssen. Hierzu gibt es verschiedene Möglichkeiten, wie eine derartige Authentifizierung realisiert werden kann, was in den folgenden Figuren näher beschrieben wird.

Generell ist es denkbar, dass bspw. der Frankierabdruck 14, der eineindeutig einem Empfänger zuordenbar ist, als Authentifizierung des Empfängers gilt, so dass dieser nach Authentifizierung durch den auf der Postkarte befindlichen Frankierabdruck in der Lage ist, mit einem anderen auf der Postkarte befindlichen Code, wie bspw. Code 4, hinterlegte bzw. mit diesem Code verbundene Informationen von der Datenbank abzurufen. Ferner ist es denkbar, dass als Trägermedium für den Code, der mit einer individuellen Information bzw. individuellen Daten seitens eines Absenders zu assoziieren ist, ein beliebiges Trägermedium, wie bspw. auch ein Plakat oder ein digitaler Bildschirm gewählt werden kann. Wesentlich ist lediglich, dass der Empfänger zum Abruf von mit dem Code verbundenen individuellen Daten eine vom Absender gewählte Authentifizierung vornimmt, bevor er die individuellen Daten, die mit dem Code assoziiert sind, abrufen kann.

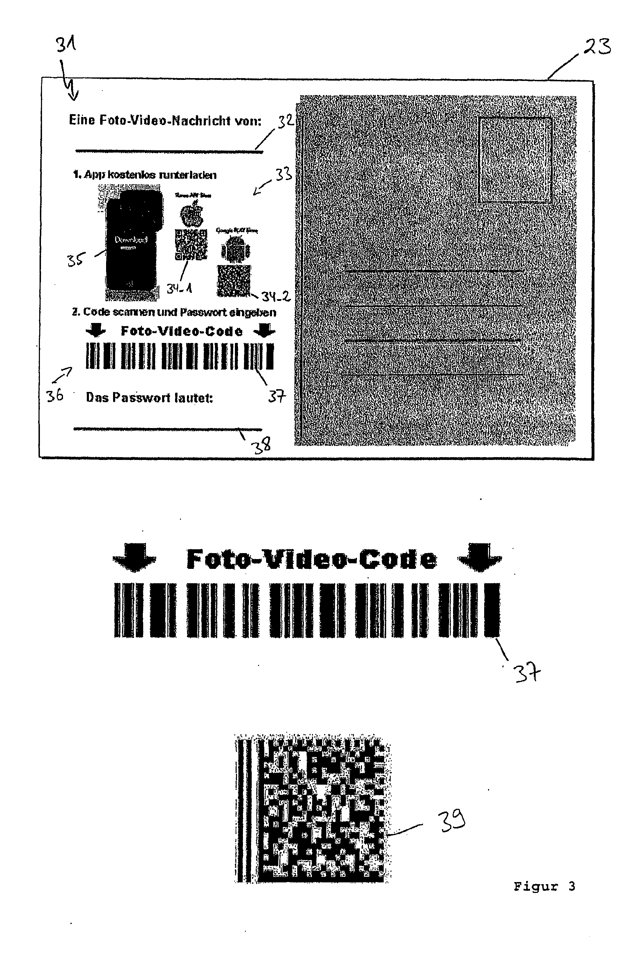

Figur 3 zeigt ein Druckerzeugnis, hier nämlich eine Postkarte 23. Auf der Postkarte 23 sind auf dem Feld 31, welches in der Regel zum Bedrucken bzw. handschriftlichen Niederschreiben von Informationen dient, mehrere Vordrucke vorgesehen, die den Empfänger der Postkarte 23 dazu befähigen, mittels der Postkarte 23 die für ihn hinterlegten Daten, bspw. Bild- und/oder Videodaten abzurufen und zu erkennen. Dazu ist in dem Informationsfeld 31 im ersten oberen Abschnitt vorgesehen, dass der Absender sich auf einer Linie 32 namentlich identifiziert. In einem mittleren Bereich 33 ist unter Punkt 1. "App herunterladen" erläutert, wie der Empfänger mit Hilfe einer ihm gehörenden mobilen Kommunikationseinheit eine Ausführungsform einer erfindungsgemäßen, zum Auslesen von Daten, bspw. Bild- und/oder Videodaten notwendigen Applikation herunterlädt. Je nach Betriebssystem, welches auf dem mobilen Kommunikationsgerät des Empfängers implementiert ist, muss der Empfänger eine entsprechende App 34_1 bzw. 34_2 mit Hilfe einer in seiner mobilen Kommunikationseinheit integrierten Kamera herunterladen, wie durch die bildliche Darstellung 35 einer mobilen Kommunikationseinheit angedeutet. Neben denen hier exemplarisch angedeuteten zwei App-Ausführungsformen ist es denkbar, eine Vielzahl weiterer Betriebssysteme entsprechend zu berücksichtigen. Sodann wird die gewünschte Applikation heruntergeladen und auf seiner Kommunikationseinheit implementiert. Erst dann kann er, wie im Bereich 36 unter Punkt 2. "Code scannen und Passwort eingeben" angezeigt, mit Hilfe der in der mobilen Kommunikationseinheit integrierten Kamera den Code 37 einlesen. Die nunmehr auf der mobilen Kommunikationseinheit implementierte Applikation frägt den Empfänger nach Einlesen des Codes 37 nach einem einzugebenden Passwort, welches den Empfänger autorisiert, die mit dem Code 37 assoziierten Daten, bspw. Bild- und/oder Videodaten, die der Absender dort hinterlegt hat, auszulesen. Das Passwort wird nunmehr seitens des Absenders unter dem Titel "Das Passwort lautet:" auf einer Linie 38 angegeben, so dass der Empfänger einfach nach Ablesen dieses Passworts dieses in seine mobile Kommunikationseinheit eingeben muss, wobei dann der eingelesene Code 37 insoweit decodiert wird, als die mit ihm verbundenen individuellen Daten, bspw. Bild- und/oder Videodaten auf einem Display der mobilen Kommunikationseinheit automatisch angezeigt bzw. abgespielt werden.

Anstelle des Vorsehens eines Codes, der durch Hinterlegen eines Passworts einen individuellen Zugang zu mit dem Code durch den Absender assoziierten Daten, bspw. Bild- und/oder Videodaten ermöglicht, ist es auch denkbar, dass der Absender die von ihm ausgewählten Daten, bspw. Bild- und/oder Videodaten mit einem auf der Postkarte 23 vorzusehenden Frankierabdruck 39 codiert. Da jede individuelle Postkarte bei Versenden an einen Empfänger mit einem eindeutigen Frankierabdruck versehen wird, ist auch hier wiederum eine eineindeutige Zuordnung eines Zugangs zu den Daten, bspw. Bild- und/oder Videodaten für einen entsprechenden Empfänger möglich. Der Empfänger muss nunmehr lediglich den Frankierabdruck einlesen, wobei auch hier natürlich wiederum auf seiner mobilen Kommunikationseinheit eine Ausführungsform der erfindungsgemäß dazu nötigen Applikation implementiert sein muss. Allein das Einlesen des Frankierabdrucks reicht jedoch aus, auch ohne Eingabe eines Passworts, dass die mit dem Frankierabdruck verbundenen Daten, bspw. Bild - und/oder Videodaten auf einem Display der mobilen Kommunikationseinheit des Empfängers dargestellt bzw. abgespielt werden.

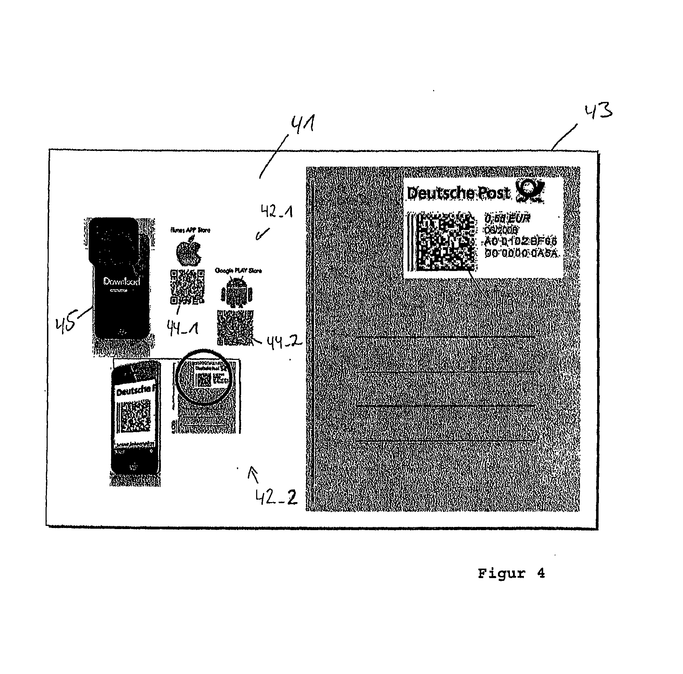

Figur 4 zeigt eine Postkarte 43, welche erlaubt, seitens eines Absenders gewünschte Daten, bspw. Bild- und/oder Videodaten mit einem Frankierabdruck zu koppeln, so dass der Empfänger durch Einlesen des Frankierabdrucks 49 automatisch autorisiert ist, die Daten, bspw. Bild- und/oder Videodaten einzusehen, was bedeutet, dass diese ihm automatisch auf einem Display seiner Kommunikationseinheit angezeigt werden. Allerdings ist es dazu notwendig, dass der Empfänger wiederum über seine mobile Kommunikationseinheit bzw. mit einer in der mobilen Kommunikationseinheit integrierten Kamera eine Ausführungsform der erfindungsgemäß dazu notwendigen Applikation, je nach Betriebssystem entweder die Applikation 44_1 bzw. 44_2 aufnimmt und herunterlädt und darüber auf der mobilen Kommunikationseinheit implementiert. Nur mit Hilfe dieser Applikation werden bei Einlesen des Frankierabdrucks 49 automatisch die Daten, bspw. Bild- und/oder Videodaten angezeigt bzw. abgespielt. Hier zeigt der in der Regel zur Hinterlegung von Informationen vorgesehene Bereich 41 zwei Bereiche an, nämlich einen oberen Bereich 42_1 und einen unteren Bereich 42_2. Im oberen Bereich 42_1 wird dem Empfänger angezeigt, dass und wie er die notwendige Applikation auf seine mobile Kommunikationseinheit herunterladen muss. Neben der schematischen Darstellung 45 einer mobilen Kommunikationseinheit ist, je nach auf der mobilen Kommunikationseinheit vorgesehenem Betriebssystem, die Applikation 44_1 oder 44_2 zum Aufnehmen aufgedruckt. Im unteren Bereich 42_2 wird ihm nunmehr angezeigt, wie er nach Herunterladen der Applikation verfahren muss, um die hinterlegten Daten, bspw. Bild- und/oder Videodaten einzusehen. Er muss nämlich mit seiner mobilen Kommunikationseinheit, die hier schematisch dargestellt ist, den auf der Postkarte befindlichen Frankierabdruck 49 einlesen, was ihn über die zuvor heruntergeladene Applikation befähigt, die mit dem Frankierabdruck 49 assoziierten Daten, bspw. Bild- und/oder Videodaten einzusehen.

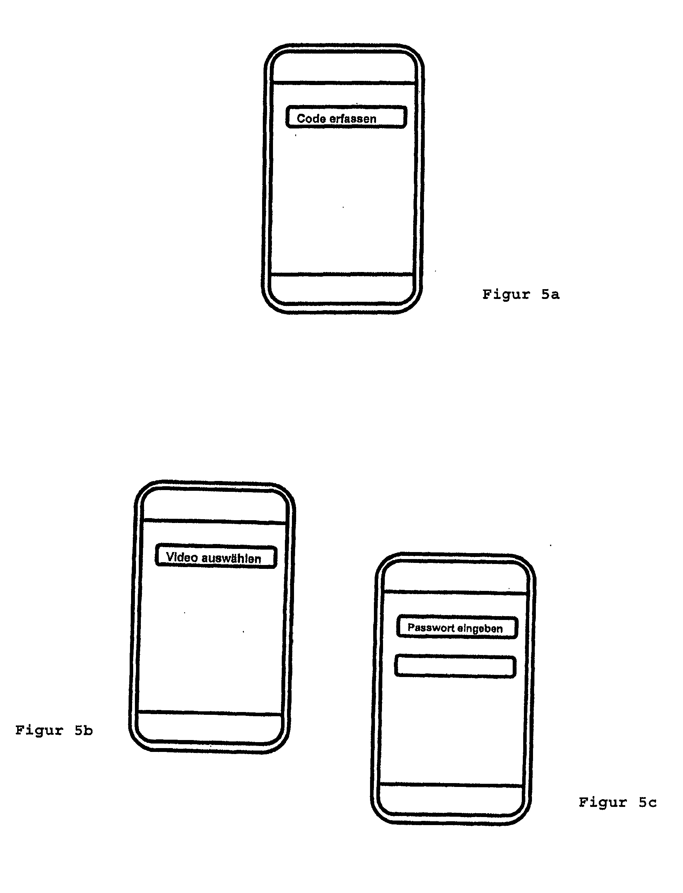

Figur 5 beschreibt in schematischer Darstellung wie ein Absender vorgehen muss, wenn er Daten, bspw. Bild- und/oder Videodaten mit einem Code assoziieren will und diese dann für einen bestimmten Empfänger individuell hinterlegen möchte.

Zunächst muss er, wie in Figur 5a dargestellt, einen bspw. auf einem Druckerzeugnis befindlichen Code einlesen. Dies geschieht in der Regel mit einer in einer ihm zugeordneten mobilen Kommunikationseinheit integrierten oder zumindest mit der mobilen Kommunikationseinheit kommunikativ verbundenen Kamera. Nachdem der Code mittels einer auf seiner mobilen Kommunikationseinheit implementierten Ausführungsform der spezifischen Applikation erfasst ist, muss der Anwender bzw. Absender Daten, wie bspw. ein von ihm gewünschtes Video oder andere Bilddaten auswählen, so dass diese mit dem eingelesenen Code verbunden bzw. diesem Code zugeordnet werden. Um die Daten, bspw. Bild- und/oder Videodaten individuell zu hinterlegen, ist es ferner möglich, wie in Figur 5c dargestellt, ein Passwort auszuwählen und einzugeben, so dass die Daten, bspw. Bild- und/oder Videodaten nur durch Eingabe eines Passworts nach Einlesen des Codes angezeigt werden. Dadurch wird der Zugang zu den Daten, bspw. Bild - und/oder Videodaten individualisiert. Darüber ist es auch möglich, dass ein ansonsten der Öffentlichkeit zugänglicher Code verwendet werden kann, wie er bspw. auf nahezu jedem Produkt oder auch einer beliebigen Postkarte vorgesehen ist.

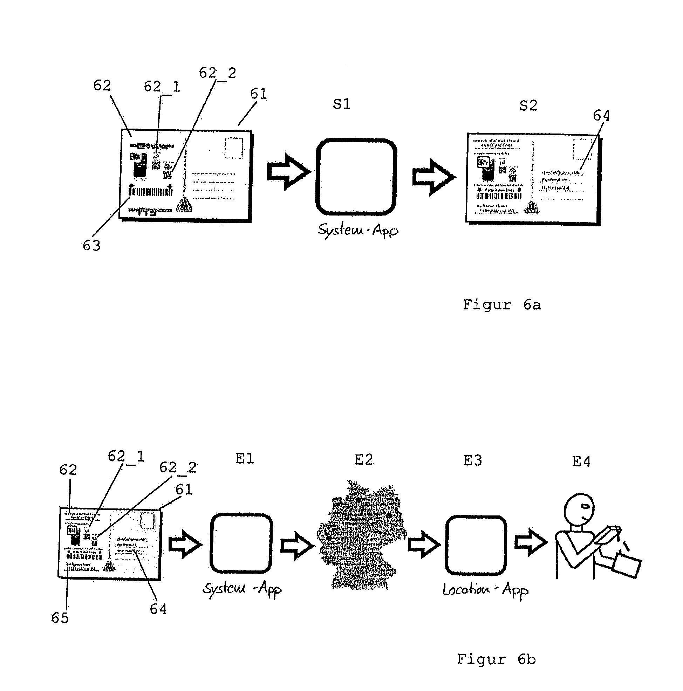

Figur 6 beschreibt in schematischer Darstellung eine weitere Ausführungsform des erfindungsgemäßen Verfahrens. Figur 6a zeigt schrittweise, wie ein Absender dabei vorgehen muss, um individuelle Daten, wie bspw. individuelle Text-, Bild- und/oder Videodaten einem oder mehreren von ihm ausgewählten Empfängern zu übermitteln bzw. diesen zugänglich zu machen. Der Absender verfügt dabei über eine Postkarte 61, die im Handel und/oder durch öffentliche Auslage erhältlich ist. Die Postkarte 61 zeigt in einem Bereich 62 eine herunterzuladende Systemapplikation (System-App), die je nach einem auf einer zum Herunterladen notwendigen Kommunikationseinheit befindlichen Betriebssystem 62_1 oder 62_2 ist. Ferner ist in dem Bereich 62 ein Code 63 dargestellt. Um mit Hilfe des Codes 63 individuelle Daten zu hinterlegen, lädt der Absender zunächst mit einer ihm zugeordneten mobilen Kommunikationseinheit die System-App mit Hilfe der dargestellten Apps 62_1 oder 62_2 herunter und liest dann den Code 63 ein. In einem Schritt S1 verbindet er mit dem Code 63 sodann die von ihm gewünschten individuellen Daten. Danach generiert die System-App ein Passwort, oder alternativ dazu gibt der Absender selbst ein Passwort ein und notiert dieses, in der Regel handschriftlich, auf der Postkarte 61. Die Postkarte 61 wird sodann in einem Schritt S2 an den von ihm gewünschten Empfänger, wie im Bereich 64 zu vermerken ist, verschickt oder diesem direkt übergeben.

In Figur 6b ist nunmehr dargestellt, wie ein Empfänger dieser vom Absender verschickten Postkarte 61 verfahren muss, um letztlich die hinter dem Code 63 hinterlegten Daten einsehen zu können. Der Empfänger empfängt die Postkarte 61 mit einem darauf befindlichen Passwort 65. Der Empfänger lädt ebenfalls die System-App 62_1 oder 62_2 mit Hilfe einer ihm zugeordneten mobilen Kommunikationseinheit herunter. Sodann wird in einem Schritt E1 diese Systemapplikation gestartet. Nach Starten der Systemapplikation wird der Empfänger in einem Schritt E2 automatisch mittels einer Ortungs-, in der Regel einer GPS-Funktion seiner mobilen Kommunikationseinheit geortet. Nach Ortung wird dem Empfänger in einem Schritt E3 durch die Systemapplikation eine lokal nächstgelegene Applikation angeboten, mit deren Hilfe der Empfänger letztlich die mit dem Code 63 verknüpften individuellen Daten einsehen kann. Alternativ kann der Empfänger in einem Schritt E4 die von ihm gewünschte App aus einer ihm von der System-App angezeigten Liste auswählen. Nach dem Herunterladen der vorgeschlagenen oder aus der Liste ausgewählten App, wie schematisch dargestellt, startet er diese auf seiner mobilen Kommunikationseinheit. Mit Hilfe einer in der mobilen Kommunikationseinheit integrierten oder zumindest mit dieser in Kommunikationsverbindung stehenden Kamera liest der Empfänger den Code 63 auf der Postkarte 61 ein, wird sodann seitens der Applikation nach einem Passwort gefragt, welches er anhand des auf der Postkarte 61 notierten Passworts 65 eingibt, worauf automatisch die von dem Absender hinterlegten individuellen Daten wie bspw. Videodaten auf einem Display der mobilen Kommunikationseinheit angezeigt und ggf. auch durch eine entsprechende Lautsprechereinheit der mobilen Kommunikationseinheit akustisch wahrnehmbar gemacht werden.

In der in Figur 6 dargestellten Ausführungsform des erfindungsgemäßen Verfahrens sind zwei Applikationen zu verwenden, um letztlich die individuellen Daten, die mit Hilfe eines Codes 63 hinterlegt sind, für einen Empfänger einsehbar zu machen. Dabei ist eine erste Applikation, hier als Systemapplikation genannt, dazu da, um darüber die individuellen Daten mit dem Code 63 verknüpfen zu können und ggf. ein Passwort zu generieren. Ferner dient die Systemapplikation auf Seiten des Empfängers dazu, nach einer Ortung der dem Empfänger zugeordneten mobilen Kommunikationseinheit den Empfänger darauf hinzuweisen, dass er mit einer seitens der System-App vorgeschlagenen, in lokaler Nähe des Empfängers herunterzuladenden App die vom Absender hinterlegten individuellen Daten nach Einlesen des Codes erkennen kann. Alternativ dazu ist es möglich, dass ein Empfänger einen beispielsweise auf einer Postkarte befindlichen QR-Code, in welchem eine URL codiert ist, mit einer gängigen Smartphone-App oder einem Scanner, der mit einer dem Empfänger zugeordneten Kommunikationseinheit verbunden ist, einscannt und sodann auf eine entsprechende mit der URL verknüpfte Website bzw. Homepage gelangt. Dort wird der Empfänger nunmehr automatisch zu einem App-Store, wie beispielsweise von Google, Apple, etc. bereitgestellt, weitergeleitet bzw. verlinkt, der ein Betriebssystem einer mit dem Empfänger verbundenen Kommunikationseinheit unterstützt. Ist keine automatisierte Erkennung des entsprechenden Betriebssystems möglich, erfolgt eine Auswahl durch den Empfänger aus einer Liste, die in der Homepage bereitgestellt wird. Die Homepage erkennt außerdem einen Standort des Empfängers durch eine Interpretation von Geo-Daten, die der Empfänger bei seiner Ankunft auf der Website bzw. Homepage bereitstellt. Mit Hilfe dieser Funktion bekommt nunmehr der Empfänger eine lokal nächstgelegene App zum Downloaden, d. h. zum Herunterladen angeboten, oder der Empfänger kann eine für ihn passende lokale App aus einer Liste auswählen und herunterladen.

## Patentansprüche

1. Codebasiertes Informationssystem für mindestens eine mobile Kommunikationseinheit, bei dem mittels einer spezifischen, auf der mindestens einen mobilen Kommunikationseinheit zu implementierenden Applikation individuelle Daten einem Code zuzuordnen sind, die Zuordnung des Codes zu den individuellen Daten auf eine als zentraler Server dienenden Datenbank zu übertragen und dort zu hinterlegen ist, und über die mindestens eine mobile Kommunikationseinheit der Code mittels der auf der mindestens einen mobilen Kommunikationseinheit implementierten Applikation zu erkennen ist, wodurch die Zuordnung des Codes zu den individuellen Daten von der Datenbank abgerufen und die Daten auf der mobilen Kommunikationseinheit angezeigt werden.

2. Codebasiertes Informationssystem nach Anspruch 1, bei dem einem Absender der individuellen Daten eine erste mobile Kommunikationseinheit, auf der die Applikation implementiert ist, zuzuordnen ist, worüber der Absender den Code einlesen und diesem die individuellen Daten zuordnen kann, und mindestens einem seitens des Absenders ausgewählten Empfänger der individuellen Daten eine zweite mobile Kommunikationseinheit, auf der die Applikation implementiert ist, zuzuordnen ist, worüber der Empfänger den Code einlesen kann, wodurch die Daten auf der zweiten mobilen Kommunikationseinheit angezeigt werden.

3. Codebasiertes Informationssystem nach Anspruch 1 oder 2, bei dem der Code mittels der Applikation nach Eingabe eines Passwortes zu erkennen ist.

4. Codebasiertes Informationssystem nach Anspruch 3, bei dem das Passwort von einem Absender der individuellen Daten zu vergeben und mindestens einem Empfänger und Nutzer der mindestens einen mobilen Kommunikationseinheit zu übermitteln ist.

5. Codebasiertes Informationssystem nach Anspruch 4, bei dem der mindestens eine Empfänger über die mindestens eine mobile Kommunikationseinheit mittels der darauf implementierten Applikation den Code einlesen und nach Eingabe des Passworts erkennen kann, wodurch die individuellen Daten auf der mobilen Kommunikationseinheit angezeigt werden.

6. Codebasiertes Informationssystem nach einem der voranstehenden Ansprüche, bei dem die mindestens eine mobile Kommunikationseinheit ein Mobiltelefon ist.

7. Codebasiertes Informationssystem nach Anspruch 6, bei dem eine dem Mobiltelefon eineindeutig zugeordnete Mobilfunknummer von einem Absender der individuellen Daten bei Zuordnung der Daten zu dem Code anzugeben ist, worüber der Code mittels der auf der mindestens einen mobilen Kommunikationseinheit implementierten Applikation automatisch erkannt wird.

8. Codebasiertes Informationssystem nach Anspruch 1 oder 2, bei dem aktuelle Positionsdaten der mindestens einen mobilen Kommunikationseinheit von einem Absender der individuellen Daten bei Zuordnung der Bild- und/oder Videodaten zu dem Code anzugeben ist, diese dann auf Seiten eines Empfängers der individuellen Daten und Nutzers der mindestens einen mobilen Kommunikationseinheit zu erfassen sind, wodurch der Code über die auf der mindestens einen mobilen Kommunikationseinheit implementierten Applikation automatisch erkannt wird.

9. Codebasiertes Informationssystem nach Anspruch 1 oder 2, bei dem ein Frankierabdruck einer Postsendung gleichzeitig als Code des Informationssystems dient.

10. Verfahren zum codebasierten Bereitstellen von individuellen Daten auf mindestens einer mobilen Kommunikationseinheit, bei dem mittels einer auf der mindestens einen mobilen Kommunikationseinheit zu implementierenden Applikation individuelle Daten einem Code zugeordnet werden, die Zuordnung des Codes zu den individuellen Daten auf eine als zentraler Server dienenden Datenbank übertragen und dort hinterlegt wird, die Applikation auf der mindestens einen mobilen Kommunikationseinheit implementiert wird und über die mindestens eine mobile Kommunikationseinheit der Code mittels der auf der mindestens einen mobilen Kommunikationseinheit implementierten Applikation erkannt wird, wodurch die Zuordnung des Codes zu den individuellen Daten von der Datenbank abgerufen und die Daten auf der mobilen Kommunikationseinheit angezeigt werden.

11. Verfahren nach Anspruch 10, das mit Hilfe eines codebasierten Informationssystems nach einem der Ansprüche 1 bis 9 durchgeführt wird.

## Geänderte Patentansprüche

### Geänderte Patentansprüche gemäss Regel 137(2) EPÜ.

**1.** Codebasiertes Informationssystem für mindestens eine mobile Kommunikationseinheit, **dadurch gekennzeichnet, dass** mittels einer spezifischen, auf der mindestens einen mobilen Kommunikationseinheit zu implementierenden Applikation individuelle Daten einem Code zuzuordnen sind, die Zuordnung des Codes zu den individuellen Daten auf eine als zentraler Server dienenden Datenbank zu übertragen und dort zu hinterlegen ist, und über die mindestens eine mobile Kommunikationseinheit der Code mittels der auf der mindestens einen mobilen Kommunikationseinheit implementierten Applikation zu erkennen ist, wodurch die Zuordnung des Codes zu den individuellen Daten von der Datenbank abgerufen und die Daten auf der mobilen Kommunikationseinheit angezeigt werden.

**2.** Codebasiertes Informationssystem nach Anspruch 1, bei dem einem Absender der individuellen Daten eine erste mobile Kommunikationseinheit, auf der die Applikation implementiert ist, zuzuordnen ist, worüber der Absender den Code einlesen und diesem die individuellen Daten zuordnen kann, und mindestens einem seitens des Absenders ausgewählten Empfänger der individuellen Daten eine zweite mobile Kommunikationseinheit, auf der die Applikation implementiert ist, zuzuordnen ist, worüber der Empfänger den Code einlesen kann, wodurch die Daten auf der zweiten mobilen Kommunikationseinheit angezeigt werden.

**3.** Codebasiertes Informationssystem nach Anspruch 1 oder 2, bei dem der Code mittels der Applikation nach Eingabe eines Passwortes zu erkennen ist.

**4.** Codebasiertes Informationssystem nach Anspruch 3, bei dem das Passwort von einem Absender der individuellen Daten zu vergeben und mindestens einem Empfänger und Nutzer der mindestens einen mobilen Kommunikationseinheit zu übermitteln ist.

**5.** Codebasiertes Informationssystem nach Anspruch 4, bei dem der mindestens eine Empfänger über die mindestens eine mobile Kommunikationseinheit mittels der darauf implementierten Applikation den Code einlesen und nach Eingabe des Passworts erkennen kann, wodurch die individuellen Daten auf der mobilen Kommunikationseinheit angezeigt werden.

**6.** Codebasiertes Informationssystem nach einem der voranstehenden Ansprüche, bei dem die mindestens eine mobile Kommunikationseinheit ein Mobiltelefon ist.

**7.** Codebasiertes Informationssystem nach Anspruch 6, bei dem eine dem Mobiltelefon eineindeutig zugeordnete Mobilfunknummer von einem Absender der individuellen Daten bei Zuordnung der Daten zu dem Code anzugeben ist, worüber der Code mittels der auf der mindestens einen mobilen Kommunikationseinheit implementierten Applikation automatisch erkannt wird.

**8.** Codebasiertes Informationssystem nach Anspruch 1 oder 2, bei dem aktuelle Positionsdaten der mindestens einen mobilen Kommunikationseinheit von einem Absender der individuellen Daten bei Zuordnung der Bild- und/oder Videodaten zu dem Code anzugeben ist, diese dann auf Seiten eines Empfängers der individuellen Daten und Nutzers der mindestens einen mobilen Kommunikationseinheit zu erfassen sind, wodurch der Code über die auf der mindestens einen mobilen Kommunikationseinheit implementierten Applikation automatisch erkannt wird.

**9.** Codebasiertes Informationssystem nach Anspruch 1 oder 2, bei dem ein Frankierabdruck einer Postsendung gleichzeitig als Code des Informationssystems dient.

**10.** Verfahren zum codebasierten Bereitstellen von individuellen Daten auf mindestens einer mobilen Kommunikationseinheit, **dadurch gekennzeichnet, dass** mittels einer auf der mindestens einen mobilen Kommunikationseinheit zu implementierenden Applikation individuelle Daten einem Code zugeordnet werden, die Zuordnung des Codes zu den individuellen Daten auf eine als zentraler Server dienenden Datenbank übertragen und dort hinterlegt wird, die Applikation auf der mindestens einen mobilen Kommunikationseinheit implementiert wird und über die mindestens eine mobile Kommunikationseinheit der Code mittels der auf der mindestens einen mobilen Kommunikationseinheit implementierten Applikation erkannt wird, wodurch die Zuordnung des Codes zu den individuellen Daten von der Datenbank abgerufen und die Daten auf der mobilen Kommunikationseinheit angezeigt werden.

**11.** Verfahren nach Anspruch 10, das mit Hilfe eines codebasierten Informationssystems nach einem der Ansprüche 1 bis 9 durchgeführt wird.
